# EUROPÄISCHE PATENTANMELDUNG

(11) **EP 1 462 068 A2**
(43) Veröffentlichungstag der Anmeldung: **29.09.2004**
(21) Anmeldenummer: 04006889.2
(22) Anmeldetag: 23.03.2004
(51) Int. Cl.: A61C 17/06

(54) **Absetzbehälter für einen Abscheider einer zahnärztlichen Absauganlage**

(30) Priorität: 24.03.2003 AT 4622003
(71) Anmelder: Pregenzer, Bruno, 6414 Mieming (AT); Konzett, Alfred, 6082 Patsch (AT)
(72) Erfinder: Pregenzer, Bruno, 6414 Mieming (AT); Konzett, Alfred, 6082 Patsch (AT)
(74) Vertreter: Torggler, Paul Norbert, Dr.

(57) **Zusammenfassung**

Ein Absetzbehälter für einen Abscheider einer zahnärztlichen Absauganlage enthält einen ein Antischaummittel langsam abgebenden Einsatzkörper (11).

## Beschreibung

Die Erfindung betrifft einen Absetzbehälter für einen Abscheider einer zahnärztlichen Absauganlage.

In zahnärztlichen Absauganlagen wird mittels Saugluft aus dem Mund des Patienten ein Flüssigkeitsfeststoffgemisch abgesaugt und über eine erste Saugstrecke zum Abscheider transportiert. Dort wird die Luft abgetrennt und zur Saugpumpe geführt. Der Abscheider trennt vorzugsweise auch die Flüssigkeit von den Feststoffen, die in einem abnehmbaren Sammelbehälter aufgefangen werden, wobei die Flüssigkeit dem Abfluss übergeben wird.

Derartige zahnärztliche Sauganlagen sind aufgrund der Zusammensetzung des abzusaugenden und zu behandelnden Gemisches (Blut, Speichel, Wasser, Eiter, Zahnmaterial, Amalgamreste, usw.) mit besonderen Problemen behaftet, die zu empfindlichen Funktionsstörungen führen können. Diese Probleme liegen nicht nur in der Reinigung und in der Desinfektion der vom Gemisch durchströmten Teile der Anlage, sondern auch darin, dass die Vermischung von Blut mit dem bei der zahnärztlichen Tätigkeit immer wieder zu verwendenden Mitteln, wie Wasserstoffperoxid, zu einer intensiven Schaumbildung führen kann, die die Anlage abschaltet, da der Auslass der abgetrennten Saugluft aus dem Abscheider natürlich gegen mitströmende Fremdstoffe gesichert sein muss. Der entstehende Schaum weist dabei eine besonders große Stabilität auf, und dessen selbsttätige Zersetzung bedarf mehrerer Stunden. Die Zerlegung, Reinigung und Sterilisation eines Abscheiders ist aber anderseits nicht nur zeitaufwendig, sondern auch eine unhygienische Tätigkeit, da das Gemisch eine sehr hohe Bakterienkonzentration aufweist.

Es sind daher bereits eine Reihe von Vorschlägen bekannt geworden, ein Zusatzmittel in die erste Saugstrecke einzubringen, das einzeln oder in Kombination Reinigungs-, Desinfektions- und Antischaummittel enthält. Beispielsweise wird nach der WO 90/01909 flüssiges Zusatzmittel portionsweise aus einem Behälter zudosiert, und nach der EP 313 527 oder 353 207 werden Zusatzmitteltabletten in entsprechende Aufnahmen in der ersten Saugstrecke eingelegt, die sich langsam auflösen.

Es hat sich gezeigt, dass diese Maßnahmen entweder nicht ausreichen, um den gewünschten Effekt vor allem im Abscheider zu erzielen, oder apparativ zu aufwendig und zu teuer sind. Erfindungsgemäß wird daher zur Behebung dieser Nachteile vorgeschlagen, den Absetzbehälter mit einem ein Zusatzmittel langsam abgebenden Einsatzkörper zu bestücken.

Auf diese Weise wird eine einfache, preisgünstige Möglichkeit getroffen, den besonders anfälligen Abscheide- und Sedimentationsbereich der Absauganlage mit der benötigten Menge an Zusatzmitteln, insbesondere Antischaummitteln, zu versehen, wobei bevorzugt der Einsatzkörper in der Weise berechnet und ausgebildet ist, dass eine ständige langsame Abgabe des Zusatzmittels bis zum Austausch des gefüllten Absetzbehälters erfolgt.

Die für diesen Zeitraum benötigte Menge an Zusatzmitteln ist bevorzugt in der Wandung eines Einsatzkörpers untergebracht, der zumindest den Boden und einen unteren Teil der Innenwandflächen des Absetzbehälters auskleidet. Der Einsatzkörper ist bevorzugt behälterartig und kann dadurch in einfacher Weise in den Absetzbehälter eingeschoben werden. Um zumindest zu Beginn der Verwendung ein Aufschwimmen des Einsatzkörpers in dem anfangs nur Flüssigkeit enthaltenden Absetzbehälter zu vermeiden, ist in einer bevorzugten Ausführung vorgesehen, dass der Einsatzkörper durch einen inneren Käfig im Absetzbehälter gehalten ist. Der Käfig umfasst beispielsweise drei oder vier U-förmige Stege, die durch zumindest drei Querstege miteinander verbunden sind. Für die Fixierung des Käfigs und die Niederhaltung des Einsatzkörpers ist insbesondere vorgesehen, dass vom Boden des Absetzbehälters zumindest ein Stift hochsteht, der durch eine Öffnung im Einsatzkörper ragt und mit einer Öse an einem Steg des Käfigs verbunden, beispielsweise verrastet ist. Da der Absetzbehälter und der Käfig insbesondere aus Kunststoff bestehen, kann der Stift in der Öse auch verschweißt sein.

Der Einsatzkörper weist insbesondere einen Bestandteil auf, der sich in der im Absetzbehälter sammelnden Flüssigkeit löst. Das Zusatzmittel, das insbesondere pulvrig ist, ist in dem sich lösenden Bestandteil verteilt, sodass es über den Verwendungszeitraum des Absetzbehälters in dem Ausmaß freigesetzt wird, in dem sich der Bestandteil hält.

Beispielsweise kann der Einsatzkörper ein poröses Vlies oder dergleichen als Träger für eine salbenartige lösliche Paste mit geringer Lösegeschwindigkeit umfassen, wobei das Zusatzmittel, beispielsweise ein pulvriger Slilikonentschäumer in die Paste eingearbeitet ist.

In einer zweiten Ausführung kann der Träger für die das Zusatzmittel enthaltende Substanz aus einem Fettalkohol, beispielsweise aus 1-Octodecanol hergestellt sein, das bei einem Schmelzpunkt von ca. 59°C in Formen gegossen werden kann, und im Wasser unlöslich ist.

Das wiederum pulvrige Zusatzmittel ist in dieser Ausführung in eine wasserlösliche Verbindung auf der Basis eines Fettalkohols, insbesondere eines ethoxylierten 1-Octodecanol eingebettet.

Zum sicheren Verschluss des gefüllten Absetzbehälters ist bevorzugt als Zubehör ein Deckel vorgesehen, der mehrere elastisch ausbiegbare Laschen aufweist, wobei der Behälterrand einen hintergreifbaren Wulst und unterhalb des Wustes eine Reihe von U-förmigen Stegen aufweist, die jeweils eine Einsteckführung für die den Wulst hintergreifenden Laschen bilden, wobei die Dicke der Stege zumindest der Dicke der Laschen entspricht.

Nachstehend wird nun eine Ausführung der Erfindung anhand der beiliegenden Zeichnung näher beschrieben. Es zeigen:

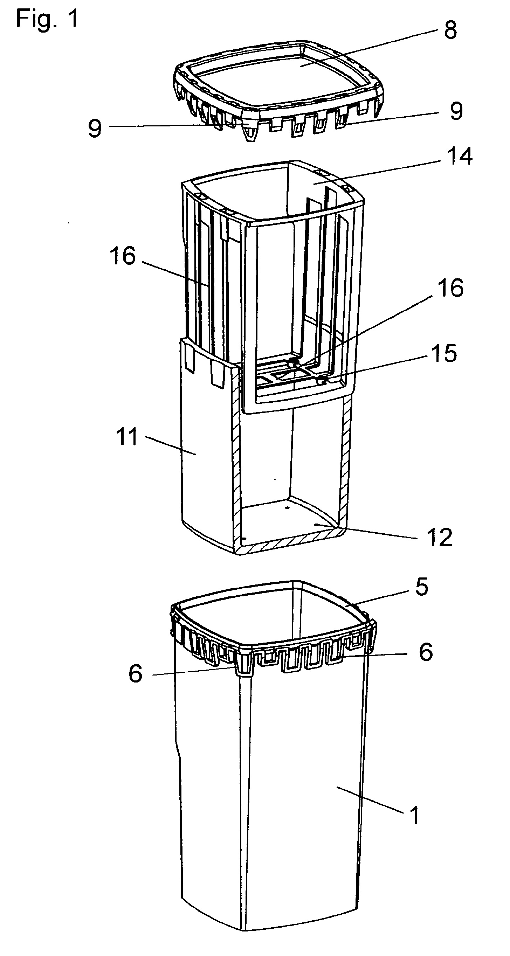

- Fig. 1: die Bestandteile eines erfindungsgemäßen Absetzbehälters und

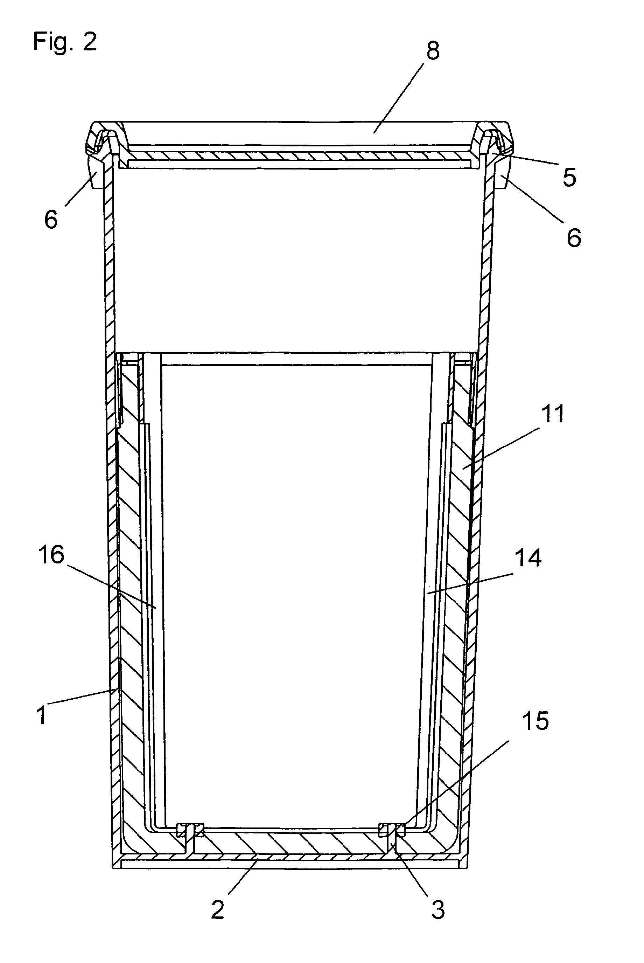

- Fig. 2: einen Längsschnitt durch den Absetzbehälter.

Ein Absetzbehälter 1 mit beispielsweise quadratischem Querschnitt weist einen Boden 2 und eine Seitenwand auf, die am oberen Rand mit einem umlaufenden untergreifbaren Wulst 5 versehen ist. Der Wulst 5 dient einerseits zur Halterung des Absetzbehälters 1 an dem nicht dargestellten Abscheider sowie zur Verrastung eines Deckels 8 nach Abnahme vom Abscheider. Unterhalb des Wulstes 5 ist eine Reihe von U-förmigen Stegen 6 vorgesehen, die Einstecknuten für den Wulst hintergreifende Laschen 9 des Deckels bilden. Die Stege 6 sind dabei so dick, dass die Laschen 9 zumindest bündig innerhalb der Stege 6 liegen, oder darin vertieft sind. Die Laschen 9 sind somit nach Verrastung am Wulst nicht zugänglich, sodass eine versehentliche Öffnung nicht erfolgen kann.

In den Absetzbehälter 1 ist ein Einsatzkörper 11 eingesetzt, der den Boden 2 und zwei einander gegenüberliegende Wandflächen bis zu einer vorbestimmten Höhe auskleidet. Der Einsatzkörper 11 kann selbstverständlich auch einen Behälter darstellen, der den unteren Bereich aller Innenwandflächen des Absetzbehälters 1 auskleidet. Um das Aufschwimmen des Einsatzkörpers 11 zu Beginn der Verwendung zu verhindern, wird der Einsatzkörper 11 durch einen einige miteinander verbundene Stege 16 aufweisenden Käfig 14 niedergehalten. Hierzu stehen vom Boden 2 des Abscheiders 1 Stifte 3 hoch, die Löcher 12 des Einsatzkörpers 11 durchsetzen und in Ösen 15 des Käfigs 14 eingreifen, in denen sie verrastet oder verschweißt sind.

Der Einsatzkörper 11 besteht insbesondere aus gleichen Teilen eines Fettalkohols und eines ethoxylierten Fettalkohols, beispielsweise 1-Octodecanol, wobei pulvriges Zusatzmittel, insbesondere Antischaummittel im wasserlöslichen ethoxylierten Fettalkohol verteilt ist.

## Patentansprüche

1. Absetzbehälter für einen Abscheider einer zahnärztlichen Absauganlage, **gekennzeichnet durch** einen ein Zusatzmittel langsam abgebenden Einsatzkörper (11).

2. Absetzbehälter nach Anspruch 1, **dadurch gekennzeichnet, dass** der Einsatzkörper (11) zumindest einen Teil der Innenflächen des Absetzbehälters (1) auskleidet.

3. Absetzbehälter nach Anspruch 2, **dadurch gekennzeichnet, dass** der Einsatzkörper (11) durch einen inneren Käfig (14) im Absetzbehälter (1) gehalten ist.

4. Absetzbehälter nach einem der Ansprüche 1 bis 3, **dadurch gekennzeichnet, dass** der Käfig (14) mit dem Boden (2) des Absetzbehälters (1) verbunden ist.

5. Absetzbehälter nach einem der Ansprüche 1 bis 4, **dadurch gekennzeichnet, dass** der Einsatzkörper (11) einen sich unter Einwirkung der sich im Absetzbehälter (1) sammelnden Flüssigkeit lösenden Bestandteil aufweist, in dem das Zusatzmittel verteilt ist.

6. Absetzbehälter nach Anspruch 5, **dadurch gekennzeichnet, dass** der Einsatzkörper (11) annähernd gleiche Teile von 1-Octadecanol und einer wasserlöslichen Verbindung auf der Basis von 1-Octadecanol umfasst, wobei das Zusatzmittel in der wasserlöslichen Verbindung verteilt ist.

7. Absetzbehälter nach einem der Ansprüche 1 bis 6, **dadurch gekennzeichnet, dass** das Zusatzmittel pulvrig ist.

8. Absetzbehälter nach einem der Ansprüche 1 bis 7, **dadurch gekennzeichnet, dass** das Zusatzmittel ein Antischaummittel ist.

9. Absetzbehälter nach einem der Ansprüche 1 bis 8, **dadurch gekennzeichnet, dass** als Zubehör ein Deckel (8) vorgesehen ist, der mehrere elastisch ausbiegbare Laschen (9) aufweist, und dass der Behälterrand einen hintergreifbaren Wulst (5) und unterhalb des Wustes (5) eine Reihe von U-förmigen Stegen (6) aufweist, die jeweils eine Einsteckführung für die den Wulst (5) hintergreifenden Laschen (9) aufweist, wobei die Dicke der Stege (6) zumindest der Dicke der Laschen (9) entspricht.
